# FASCICULE DE BREVET EUROPEEN

(11) **EP 2 503 776 B1**
(45) Date de publication et mention de la délivrance du brevet: **15.05.2019**
(21) Numéro de dépôt: 12160049.8
(22) Date de dépôt: 19.03.2012
(51) Int. Cl.: H04N 5/3745, H04N 5/355

(54) **Capteur d'image à très haute dynamique**
Bilderfassunggerät mit sehr hoher Dynamik
Image sensor with very high dynamics

(30) Priorité: 23.03.2011 FR 1152414
(43) Date de publication de la demande: 26.09.2012
(73) Titulaire: Teledyne e2v Semiconductors SAS, 38120 Saint-Egrève (FR)
(72) Inventeur: Fereyre, Pierre, 38340 VOREPPE (FR); Mayer, Frédéric, 38500 VOIRON (FR)
(74) Mandataire: Desvignes, Agnès

(56) Documents cités:
- EP-A1- 2 071 628
- WO-A1-2010/066850
- US-A1- 2008 048 212
- US-A1- 2008 179 490

## Description

L'invention concerne les capteurs d'image, et plus particulièrement des capteurs destinés à recueillir des images à la fois à très bas niveau de luminance et à très haut niveau de luminance.

La plupart des capteurs électroniques à état solide fonctionnent bien pour un niveau de luminance moyen. Ils peuvent fonctionner aussi à bas niveau de luminance, en augmentant beaucoup la durée d'intégration, au détriment de la cadence de fourniture d'images. De plus, l'augmentation de durée d'intégration peut être incompatible avec l'application. Par exemple une caméra de surveillance doit fournir typiquement 30 images par seconde, ce qui limite la durée d'intégration. Ces capteurs peuvent aussi fonctionner lorsque le niveau de luminance augmente mais au-delà d'une certaine luminance ils saturent.

Certains capteurs ont été spécialement conçus pour fonctionner à bas niveau de luminance. Mais ils sont très rapidement saturés même pour une luminance moyenne lorsque des points de la scène sont plus lumineux. Parmi ces capteurs, il existe des capteurs à multiplication d'électrons.

D'autres capteurs ont été conçus pour fonctionner à haut niveau de luminance, avec des systèmes complexes permettant d'établir une courbe de réponse logarithmique (ou au moins à deux pentes) en fonction de la lumière. Ces capteurs ne peuvent pas bien fonctionner à bas niveau de luminance.

Il existe un besoin pour des capteurs à très haute dynamique vers le haut et vers le bas, c'est-à-dire des capteurs capables de fonctionner à la fois à très haut niveau de luminance et à très bas niveau de luminance, y compris au sein d'une même image très contrastée.

L'invention propose un capteur à pixels actifs, chaque pixel comportant au moins une photodiode, un noeud de stockage de charges, une structure d'amplification par multiplication d'électrons, des moyens de transfert d'électrons de la photodiode vers la structure d'amplification, des moyens de transfert des électrons de la structure d'amplification vers le noeud de stockage après multiplication, un transistor de réinitialisation du potentiel du noeud de stockage avant transfert des électrons dans le noeud de stockage, le capteur comportant en outre un circuit de lecture pour échantillonner le potentiel du noeud de stockage de charges après réinitialisation et après transfert des électrons dans le noeud de stockage et pour fournir une mesure d'éclairement correspondante, le capteur comportant en outre des moyens pour faire au cours d'une trame d'image un premier transfert de charges de la photodiode vers la structure de multiplication au bout d'une première durée (Ti1) et pour donner alors à la structure d'amplification un premier facteur de multiplication d'électrons (k1) avant un premier transfert de charges dans le noeud de stockage, des moyens pour faire au cours de la même trame d'image un deuxième transfert de charges de la photodiode vers la structure de multiplication au bout d'une deuxième durée (Ti2) suivant la première durée et pour donner alors à la structure un deuxième facteur de multiplication d'électrons différent du premier (k2) avant un deuxième transfert de charges de la structure de multiplication vers le noeud de stockage, et des moyens pour sélectionner pixel par pixel une mesure d'éclairement correspondant au premier facteur ou au deuxième facteur en fonction de l'éclairement du pixel ; en pratique : en fonction d'un niveau du potentiel du noeud de stockage après un transfert des électrons dans le noeud de stockage, évalué à partir d'une quantité de charges transférée dans le noeud de stockage.

En d'autres mots : le capteur observe une scène d'image en faisant pour chaque trame d'image deux transferts de charges successifs correspondant à deux temps d'intégration et correspondant à deux facteurs de multiplication différents. Si la quantité d'électrons mesurée pour un pixel avec l'un des deux facteurs de multiplication aboutit à un niveau de signal qui montre que l'autre facteur serait plus approprié, on écarte cette mesure pour ce pixel et on conserve la mesure effectuée avec l'autre facteur.

On peut faire le test avec la mesure faite avec le facteur de multiplication le plus élevé ; si la quantité d'électrons mesurée est trop élevée (indiquant une saturation probable du pixel), on écarte cette mesure et on utilise la mesure faite avec le facteur de multiplication le plus petit. Mais on peut aussi procéder en observant le niveau de potentiel pour le facteur de multiplication le plus faible ; si la quantité d'électrons mesurée est trop faible, on écarte cette mesure parce qu'elle n'est pas significative et on utilise la mesure faite avec le facteur le plus élevé.

Le facteur de multiplication le plus petit est supérieur ou égal à 1, c'est-à-dire qu'il peut correspondre à une absence ou quasi-absence de multiplication mais les électrons transitent quand même dans la structure d'amplification. Le facteur le plus élevé peut aller de 2 à 100, voire plus dans certains cas.

La valeur numérique de la mesure d'éclairement faite avec le facteur de multiplication le plus petit est multipliée par le rapport entre les deux facteurs pour que les mesures faites avec les deux facteurs soient rapportées à la même échelle.

De préférence, non seulement les facteurs de multiplication sont différents mais de plus, les temps d'intégration pour les deux mesures sont différents. De préférence encore, la mesure effectuée avec un facteur de multiplication plus faible est faite avec le temps d'intégration le plus court, et la mesure effectuée avec le facteur de multiplication le plus élevé est effectuée avec le temps d'intégration le plus long.

La valeur numérique résultant de la mesure d'éclairement faite avec le temps le plus court est multipliée par le rapport entre le temps d'intégration le plus long et le temps d'intégration le plus court.

Le capteur comporte de préférence
- des moyens pour effectuer une réinitialisation du potentiel du noeud de stockage avant le premier transfert de charges de la structure d'amplification vers le noeud de stockage, et un échantillonnage du potentiel du noeud de stockage après ce premier transfert,
- des moyens pour effectuer une réinitialisation du potentiel du noeud de stockage et un échantillonnage de ce potentiel dans le circuit de lecture, avant le deuxième transfert de charges de la structure d'amplification vers le noeud de stockage, et un échantillonnage du potentiel du noeud de stockage après ce deuxième transfert,
- des moyens pour effectuer dans le circuit de lecture une conversion analogique-numérique d'au moins une différence entre un échantillon pris après un transfert d'électrons vers le noeud de stockage et un échantillon pris entre la réinitialisation du noeud de stockage et ce transfert.

Deux possibilités principales de mise en oeuvre de ces trois groupes d'opérations peuvent être envisagées. Dans une première possibilité on utilise deux capacités d'échantillonnage dans un circuit de lecture situé en amont d'un convertisseur analogique-numérique, une capacité étant réservée à un échantillonnage du niveau de réinitialisation du noeud de stockage et une autre capacité étant réservée à un échantillonnage du niveau après transfert d'électrons vers le noeud de stockage. Dans ce cas on échantillonne systématiquement dans la deuxième capacité le niveau résultant du premier transfert vers le noeud de stockage ; puis on ré-échantillonne conditionnellement dans la deuxième capacité le niveau résultant du deuxième transfert. Le deuxième facteur de multiplication est le plus élevé ; la deuxième durée d'intégration est aussi de préférence la plus longue. La condition est une condition de niveau de signal du noeud de stockage après un transfert, le but étant d'effectuer le ré-échantillonnage seulement s'il n'y a pas de risque de saturation du pixel. Le test de la condition peut être effectué à partir du niveau du potentiel du noeud de stockage après le premier transfert ou après le deuxième transfert vers le noeud de stockage.

Dans un autre mode de fonctionnement, le circuit de lecture comporte trois capacités d'échantillonnage ; la première est encore réservée à l'échantillonnage du niveau de réinitialisation ; la deuxième sert à l'échantillonnage du niveau après le premier transfert ; la troisième sert à l'échantillonnage après le deuxième transfert. Ce mode de fonctionnement permet de faire un double échantillonnage corrélé véritable.

La structure d'amplification par multiplication d'électrons dans chaque pixel, insérée entre une première grille de transfert (de la photodiode vers la structure de multiplication) et une deuxième grille de transfert (de la structure d'amplification vers le noeud de stockage), comprend de préférence deux grilles d'accélération séparées situées entre la première et la deuxième grille de transfert, et une région de diode intermédiaire à potentiel superficiel fixe située entre les deux grilles d'accélération, et des moyens pour appliquer aux grilles d'accélération une succession d'alternances de potentiels hauts et bas permettant des transferts successifs de charges d'une grille d'accélération à l'autre à travers la région de diode intermédiaire.

Le coefficient d'amplification est pratiquement proportionnel au nombre d'alternances et on le fait donc varier en modifiant le nombre d'alternances. S'il n'y a pas ou pratiquement pas d'alternances, le facteur d'amplification est égal à 1.

On notera que US2008/0048212 décrit une structure d'amplification à l'intérieur du pixel, et que WO2010/066850 décrit une trame à double durée d'intégration de charges.

D'autres caractéristiques et avantages de l'invention apparaîtront à la lecture de la description détaillée qui suit et qui est faite en référence aux dessins annexés dans lesquels :
- la figure 1 représente en coupe verticale la structure générale d'un capteur d'image à pixels actifs avec une structure d'amplification permettant une multiplication d'électrons au sein du pixel ;
- la figure 2 représente un chronogramme de fonctionnement dans le cas où une image est recueillie au cours d'une trame décomposée en deux temps d'intégration successifs différents ;
- la figure 3 représente un circuit de lecture qui permet de recueillir l'image selon le chronogramme de la figure 2 ;
- la figure 4 représente une variante de chronogramme avec deux temps d'intégration différents et un double échantillonnage corrélé pour les deux temps d'intégration ;
- la figure 5 représente un circuit de lecture fonctionnant selon le chronogramme de la figure 4.

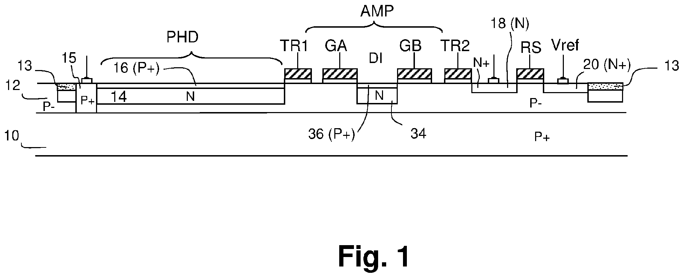

Sur la figure 1 on a représenté les éléments principaux d'un exemple de pixel actif de technologie CMOS comprenant une structure d'amplification par multiplication d'électrons au sein du pixel.

Le pixel est formé dans un substrat 10 qui comprend de préférence une couche active semiconductrice 12 de type P peu dopée (le symbole P- est utilisé pour désigner ce faible dopage) formée à la surface d'une couche plus dopée (P+). Le pixel est isolé des pixels voisins par une barrière isolante 13 qui l'entoure complètement. Cette barrière peut être une tranchée isolante superficielle au-dessus d'un caisson de type P.

Le pixel comprend une région de photodiode PHD dont le périmètre suit le contour d'une région semiconductrice de type N implantée dans une partie de la profondeur de la couche active 12. Cette région implantée est surmontée par une région superficielle 16 de type P+, qui est maintenue à un potentiel de référence zéro. Il s'agit d'une photodiode dite "pinned" (d'après le mot anglais signifiant "épinglé", qui rappelle que le potentiel de surface de la région superficielle P+ est fixé). Le potentiel de référence zéro est celui qui est appliqué à la couche active P-. Dans le cas le plus simple, c'est le potentiel du substrat de type P+ situé sous la couche active et appliquant son propre potentiel à la couche active ; le maintien de la région superficielle 16 à ce potentiel zéro est réalisé par exemple par le fait que la région 16 touche une diffusion profonde 15 de type P+ qui rejoint le substrat 10. Un contact électrique peut aussi être prévu sur cette diffusion 15 pour appliquer par ce contact un potentiel zéro à la région 16.

Une région de stockage de charges, ou noeud de stockage de charges, 18, est prévue en dehors de la région de photodiode PHD ; elle en est séparée par une succession de deux grilles de transfert TR1 et TR2 et une structure d'amplification AMP entre les deux grilles de transfert.

Le noeud de stockage de charges 18 est une diffusion de type N dans la couche active 12. Un contact est formé sur cette région, pour permettre d'appliquer le potentiel de cette région à la grille d'un transistor suiveur non représenté, afin de transformer en niveau de tension électrique la quantité de charges contenue dans le noeud de stockage.

Une autre grille RS, appelée grille de réinitialisation, permet de vider les charges du noeud de stockage vers un drain d'évacuation 20 qui est une région de type N+ reliée à un potentiel de réinitialisation positif Vref.

Pour simplifier, on n'a pas représenté des éléments qui peuvent être classiquement présents dans le pixel et notamment un transistor suiveur pour recopier le potentiel du noeud de stockage 18, et un transistor de sélection de ligne, dans le cas d'une matrice de plusieurs lignes de pixels, pour autoriser la connexion de la source du transistor suiveur à un conducteur de colonne de la matrice. Ces éléments sont de toute façon situés en dehors de la région d'isolation 13 qui entoure l'ensemble de la photodiode et de la structure d'amplification. N'est pas non plus représentée sur la coupe de la figure 1 une grille de réinitialisation du potentiel de la photodiode PHD. Cette grille permet de déverser dans un drain non représenté les charges de la photodiode au début d'une durée d'intégration.

La première grille de transfert TR1 permet d'autoriser le transfert d'électrons de la photodiode vers la structure d'amplification à la fin d'une durée d'intégration. La deuxième grille de transfert TR2 permet d'autoriser le transfert d'électrons de la structure d'amplification vers le noeud de stockage 18 à la fin d'une phase d'amplification.

Dans cet exemple, la structure d'amplification comprend deux grilles d'accélération GA et GB séparées par un intervalle. Cet intervalle est occupé par une région de diode intermédiaire DI, et cette région constitue une diode dite "pinned", comme la photodiode. Elle est donc constituée comme la photodiode (mais pas obligatoirement avec les mêmes dopages), par une région diffusée 34 de type N dans la couche active 12, cette région étant recouverte par une région superficielle 36 de type P+. Cette région 36 est maintenue au potentiel de référence zéro par exemple par le fait qu'elle touche, ce qu'on ne voit pas sur les figures, une région profonde de type P+ rejoignant le substrat, analogue à la région 15 qui touche la photodiode.

Des moyens de commutation de potentiel sont prévus pour appliquer directement aux grilles d'accélération GA et GB des potentiels hauts ou bas selon la phase de transfert ou d'amplification concernée. A la fin d'une période d'intégration, les électrons sont transférés de la photodiode vers la structure d'amplification ; ils viennent se stocker sous la grille GA. Pendant la phase d'amplification, une alternance de potentiels haut et bas est appliquée en opposition de phase aux grilles GA et GB. Les électrons sont alternativement accélérés de la grille GA vers la grille GB et réciproquement. Les tensions appliquées aux grilles sont suffisantes pour créer une ionisation par impact : les électrons accélérés arrachent d'autres électrons, multipliant le nombre d'électrons par un coefficient un peu supérieur à 1 qui dépend des tensions appliquées. Ce coefficient est multiplié par le nombre d'alternances de potentiels. Le nombre d'alternances peut être de plusieurs centaines ou milliers. Le coefficient global d'amplification dépend donc des tensions appliquées et du nombre d'alternances. Les moyens de commutation ne sont pas représentés car ils ne sont pas situés dans le pixel. Ils sont communs aux pixels d'une ligne ou d'une colonne ou à tous les pixels de la matrice. A la fin de la phase d'amplification, les électrons sont stockés sous la grille GB ; de là ils sont transférés vers le noeud de stockage 18 à travers la grille TR2.

Selon l'invention, on prévoit que la structure d'amplification peut fonctionner avec au moins deux coefficients d'amplification, c'est-à-dire en pratique avec au moins deux nombres d'alternances différents, les tensions appliquées aux grilles étant en pratique constantes et choisies en raison d'impératifs technologiques qui sont les suivants : tension assez élevée pour augmenter même faiblement le nombre d'électrons à chaque alternance, tension pas trop élevée pour ne pas dégrader les oxydes isolants placés sous les grilles GA et GB. Le premier coefficient d'amplification peut être égal à 1, c'est-à-dire qu'il n'y a pas ou pratiquement pas d'alternances des potentiels opposés sur les grilles GA et GB : les électrons arrivant sous la grille GA sont ensuite transférés une seule fois vers la grille GB et repartent de là directement vers le noeud de stockage. Le deuxième coefficient d'amplification est obtenu avec un nombre d'alternances qui peut aller de plusieurs dizaines à plusieurs centaines ou même plusieurs milliers.

De manière générale, le pixel fait partie d'une matrice de pixels en lignes et en colonne, les pixels d'une même ligne sont adressés par un conducteur de ligne, et les sorties des pixels d'une même colonne sont reliées à un conducteur de colonne. Un circuit de lecture par double échantillonnage est placé en pied de colonne et permet d'échantillonner les potentiels qui apparaissent sur le conducteur de colonne lors de la sélection d'une ligne de pixels. Le potentiel apparaissant sur le conducteur de colonne correspond au potentiel du noeud de stockage, qui peut être un potentiel de réinitialisation ou un potentiel de signal utile correspondant à l'éclairement du pixel sélectionné. Le circuit de lecture échantillonne et conserve en mémoire un potentiel de réinitialisation et un potentiel utile ; il détermine la différence et la convertit en numérique.

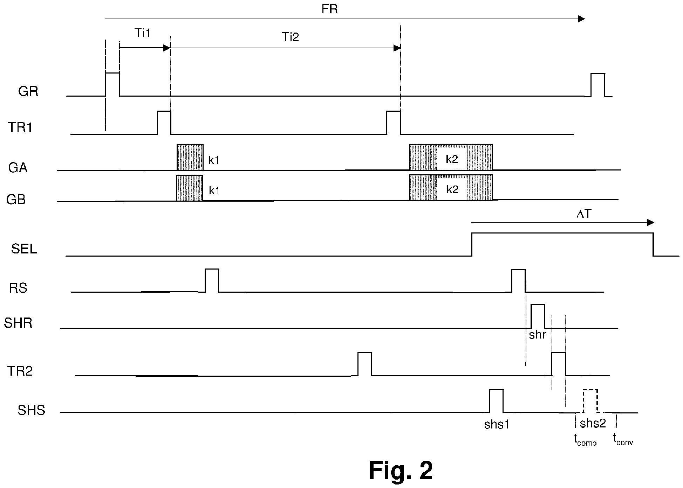

Le fonctionnement du pixel dans un capteur selon l'invention est expliqué en référence à la figure 2 pour une trame FR d'image consistant en une intégration de charges suivie d'une lecture des pixels ligne par ligne. Seuls les signaux correspondant à une ligne sont représentés pour ne pas surcharger la figure.

Le déroulement de la lecture se fait de la manière suivante, expliquée en référence au chronogramme de la figure 2.

Le signal GR représente une réinitialisation du potentiel de la photodiode pour une ligne de pixels, réalisée par exemple par une ouverture de la grille de réinitialisation de la photodiode mentionnée plus haut.

Le signal RS représente une impulsion de réinitialisation du potentiel du noeud de stockage. Il est émis successivement pour chaque ligne au moment de la lecture.

Les signaux d'échantillonnage en pied de colonne sont désignés par SHR (échantillonnage d'un niveau de réinitialisation du noeud de stockage) et SHS (échantillonnage d'un niveau utile du noeud de stockage après déversement dans ce noeud des charges amplifiées par la structure d'amplification). Ces signaux sont émis successivement ligne par ligne au cours de la lecture.

Les lignes TR1 et TR2 représentent les impulsions appliquées respectivement aux grilles TR1 et TR2.

Les lignes GA et GB représentent les durées pendant lesquelles de multiples alternances de potentiels hauts et bas sont appliqués aux grilles GA et GB de la structure d'amplification. Ces potentiels sont appliqués à tous les pixels de la matrice pour lesquels une amplification est souhaitée (par exemple tous les pixels de la matrice ou tous les pixels d'une région d'intérêt).

Le déroulement de la séquence pour la trame FR est le suivant :
- réinitialisation de la photodiode par le signal GR, la fin de cette réinitialisation constituant le début d'une période d'intégration; la fin du signal GR détermine le début d'une première durée d'intégration de charges Ti1 ;
- intégration de charges dans la photodiode
- ouverture de la première grille de transfert TR1, transférant les charges de la photodiode sous la grille GA de la structure d'amplification à la fin de la durée d'intégration Ti1 ; c'est la fin de l'ouverture de la grille TR1 qui détermine la fin de la durée Ti1 ; la première durée d'intégration est de préférence brève, c'est-à-dire inférieure ou très inférieure à la moitié de la durée totale de la trame ; la photodiode recommence à intégrer des charges dès que la grille se referme et cette intégration dure pendant une deuxième durée d'intégration Ti2
- première amplification avec un premier coefficient d'amplification k1 faible ou même unitaire (pas d'amplification) des charges maintenant situées dans la structure d'amplification, par application d'une alternance de potentiels sur les grilles GA et GB ; le nombre d'alternances est choisi pour multiplier le nombre d'électrons par un premier coefficient de multiplication k1.
- réinitialisation du potentiel du noeud de stockage par un signal RS ;
- ouverture brève de la deuxième grille de transfert TR2 pour transférer les charges amplifiées par le coefficient k1 vers le noeud de stockage ; refermeture de cette grille ;
- ouverture de la première grille de transfert TR1, définissant la fin d'une deuxième durée d'intégration Ti2, la somme des durées Ti1 et Ti2 constituant la durée d'intégration totale de la trame ; les charges correspondant à la deuxième durée passent dans la structure d'amplification et vont être amplifiées avec un deuxième coefficient d'amplification k2 différent du premier ;
- à la fin de la deuxième amplification et avant le transfert des charges amplifiées vers le noeud de stockage par la grille TR2, on fait dans l'ordre : un premier échantillonnage, par le signal shs1, dans le circuit de lecture, du niveau du noeud de stockage qui, à ce moment, correspond à la première intégration, amplifiée par le coefficient k1 ; puis une réinitialisation du noeud de stockage (RS) ; puis un deuxième échantillonnage, dans le circuit de lecture, du niveau de réinitialisation (shr) ;
- enfin, ouverture de la deuxième grille de transfert TR2, donc un deuxième transfert vers le noeud de stockage des charges de la deuxième durée d'intégration amplifiées par le deuxième coefficient d'amplification ; enfin un troisième échantillonnage, mais conditionnel et non systématique, shs2 du niveau du noeud de stockage ; le troisième échantillonnage, s'il est fait, vient remplacer le premier échantillonnage.

Le troisième échantillonnage n'est pas effectué si l'éclairement mesuré par le pixel, soit à la suite de la première durée d'intégration soit à la suite de la deuxième durée d'intégration, dépasse un seuil montrant un risque de saturation de la chaîne de mesure.

Si le troisième échantillonnage n'est pas effectué, on numérise alors la différence entre le premier échantillon et le deuxième échantillon. Cela revient à retenir le résultat de la première intégration seulement.

Dans le cas contraire, si le troisième échantillonnage est effectué (pas de risque de saturation), le troisième échantillon se substitue au premier. On numérise alors la différence entre le troisième et le deuxième échantillon, ce qui revient à mesurer le résultat de l'intégration pendant la deuxième durée seulement. Cette différence est une mesure par double échantillonnage corrélé véritable, contrairement à la numérisation de la différence entre les deux premiers échantillons.

La valeur numérique obtenue dans le premier cas (pas de troisième échantillonnage) est multipliée par un facteur qui est le rapport (k2.Ti2/k1.Ti1) pour être référencée par rapport à la même échelle que dans le deuxième cas (avec troisième échantillonnage).

Pour effectuer un troisième échantillonnage conditionnel, on peut tester le niveau de potentiel du noeud de stockage à la fin de la deuxième mesure, à un instant t_{comp} juste avant le moment du troisième échantillonnage conditionnel, ou tester le niveau de potentiel du noeud de stockage à la fin de la première mesure.

Le circuit de lecture comprend un circuit de test à cet effet qui agit pour autoriser ou non la production du signal shs2. Ce circuit mémorise par ailleurs le résultat du test et ce résultat est utilisé pour décider si on doit ou non multiplier le résultat de la mesure différentielle par un facteur multiplicatif (k2.Ti2/k1.Ti1).

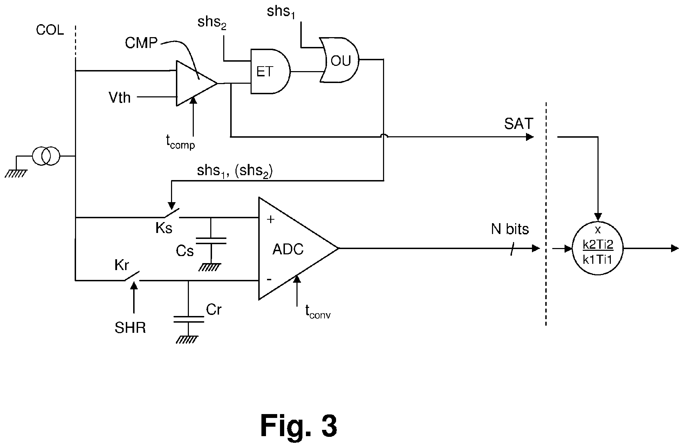

Le circuit de lecture, en pied de colonne, de la figure 3 correspond à un test fait juste avant le troisième échantillonnage à un instant t_{comp} après la deuxième ouverture de la grille TR2 donc sur le signal résultant de la deuxième durée d'intégration. Le circuit comprend un comparateur à seuil CMP. Le premier et le troisième échantillonnage se font dans une capacité Cs ; le deuxième se fait dans une capacité Cr. Un convertisseur analogique-numérique ADC convertit la différence entre les échantillons de potentiel stockés dans les deux capacités et fournit un résultat de mesure. Le résultat de la comparaison (signal SAT) n'influe pas sur le passage du signal shs1 ; mais il interdit le passage du signal shs2 si le résultat montre que l'éclairement pendant la deuxième durée d'intégration dépasse un seuil. Le résultat SAT de la comparaison est transmis avec l'information de la conversion analogique-numérique pour permettre de faire, en cas de suppression de l'échantillonnage shs2, la multiplication par (k2.Ti2/k1.Ti1).

Plutôt que de tester le niveau atteint suite à la deuxième intégration, on peut envisager aussi de tester le niveau atteint suite à la première intégration, donc au moment où le premier échantillon est stocké sous la commande du signal shs1. En particulier, si on utilise un convertisseur analogique-numérique à rampe, on peut démarrer une première rampe de conversion dès la fin du signal shr pour effectuer une conversion provisoire qui sera suivie par une conversion définitive. A ce moment, la différence entre le premier échantillon et le deuxième est disponible aux bornes du convertisseur. La différence entre ces échantillons est faible puisque à la fois la durée d'intégration Ti1 est faible et le coefficient d'amplification k1 est faible, de sorte que le convertisseur va donner très rapidement une information sur la mesure. Le niveau atteint en sortie du convertisseur après la courte rampe provisoire est utilisé pour déclencher ou non le troisième échantillonnage conditionnel. La conversion provisoire peut consister à observer la sortie d'un comparateur d'entrée du convertisseur ; le comparateur reçoit sur ses deux entrées les échantillons de signal utile et de niveau de réinitialisation ; une courte rampe de tension linéaire de durée prédéfinie est appliquée à l'entrée de signal utile et s'ajoute au signal utile ; le comparateur bascule dès que la tension différentielle entre ses entrées devient nulle. Le comparateur bascule avant la fin de la rampe si l'éclairement est faible, il ne bascule pas si l'éclairement est fort. S'il y a trop de lumière, on ne déclenchera pas le signal shs2 et on commencera la conversion définitive de la différence entre les premier et deuxième échantillons. Si au contraire il y a peu de lumière, on déclenchera le troisième échantillonnage et on fera la conversion définitive de la différence entre les premier et troisième échantillons.

Enfin, pour terminer l'explication de la figure 2, on rappelle que l'intégration se fait avec un décalage temporel entre chaque ligne. La valeur du décalage est le temps ΔT qu'il faut pour effectuer les trois échantillonnages et effectuer la conversion analogique-numérique des différences d'échantillons. Cette durée ΔT est représentée ici par la durée d'un signal SEL qui commande la sélection d'une ligne de pixels. Cette sélection agit sur la ligne pour reporter sur un conducteur de colonne, vers le circuit de lecture en pied de colonne, les niveaux de potentiel successifs du noeud de stockage. On notera que le signal SEL peut être plus court que la durée ΔT mais il doit couvrir obligatoirement au moins les trois instants d'échantillonnage shr, shs1 et shs2 (pas forcément toute la durée de la conversion).

Par conséquent tous les signaux représentés à la figure 2 pour une ligne doivent être répétés à l'identique mais décalés d'au moins ΔT pour la ligne suivante et ainsi de suite (fonctionnement dit en "rolling shutter").

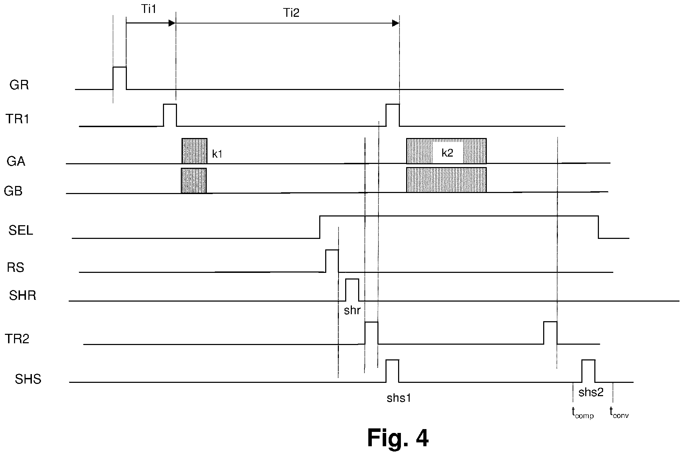

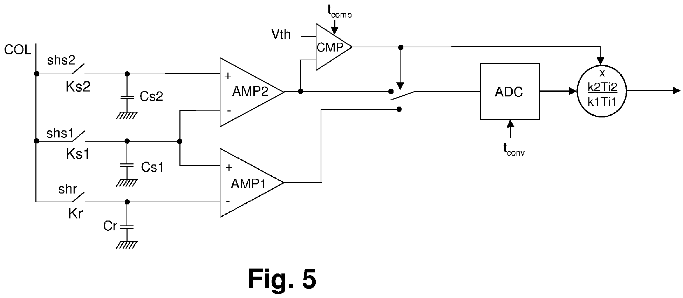

Pour pouvoir faire un double échantillonnage corrélé véritable aussi bien dans le cas des forts éclairements que dans le cas des faibles éclairements, on peut utiliser en pied de colonne un dispositif à trois capacités d'échantillonnage, et on modifie légèrement le chronogramme de la figure 2, pour aboutir à celui de la figure 4. Le circuit de lecture qui permet ce fonctionnement est représenté à la figure 5.

Le chronogramme est identique à celui de la figure 2 pour la réinitialisation d'une ligne de photodiodes par le signal GR, pour les impulsions de transfert par les grilles TR1 à la fin des deux durées d'intégration, et pour l'amplification des charges par des coefficients k1 et k2 à la suite de ces transferts.

Pour la lecture de la ligne, on procède maintenant comme suit, le signal SEL servant à sélectionner la ligne à laquelle sont appliquées les impulsions d'échantillonnage:
- réinitialisation par le signal RS du potentiel du noeud de stockage ;
- échantillonnage de ce potentiel par le circuit de lecture (signal shr) dans une première capacité d'échantillonnage Cr ;
- transfert vers le noeud de stockage, par la grille TR2, des charges intégrées pendant la première durée Ti1 et amplifiées avec le premier coefficient k1 ; après ce premier transfert par la grille TR2, on fait comme à la figure 2 un deuxième transfert par la grille TR1 pour mettre dans la structure d'amplification les charges issues de la deuxième durée d'intégration ;

- deuxième échantillonnage shs1 dans une deuxième capacité Cs1 (figure 5) ;
- puis, à la fin d'un temps réservé à l'amplification avec un coefficient k2, on effectue le deuxième transfert vers le noeud de stockage par la grille TR2 ; les charges intégrées pendant la durée Ti2 et amplifiées avec le coefficient k2 passent dans le noeud de stockage où elles s'ajoutent aux précédentes ;
- troisième échantillonnage shs2 (qui cette fois n'est pas optionnel mais systématique) ; ce troisième échantillonnage stocke le nouveau niveau de potentiel dans une troisième capacité Cs2.

La figure 5 représente le circuit de lecture correspondant, en pied de colonne. Un premier amplificateur différentiel AMP1 mesure la différence entre les niveaux de la première et de la deuxième capacité ; cette différence représente la mesure des charges intégrées pendant la première durée Ti1 et amplifiées par le coefficient k1. Il s'agit d'une mesure par double échantillonnage corrélé véritable puisque le noeud de stockage a été remis à zéro avant le déversement.

Un deuxième amplificateur différentiel AMP2 mesure la différence entre les niveaux stockés dans la troisième et la deuxième capacités ; cette différence représente le complément de charges dues à la deuxième durée d'intégration Ti2 seulement, amplifiées par le coefficient k2.

La sortie du deuxième amplificateur est appliquée à un comparateur à seuil qui détecte un risque de saturation si le seuil est dépassé.

Si le seuil est dépassé, c'est-à-dire si l'éclairement est fort, on aiguille vers le convertisseur analogique-numérique la sortie du premier amplificateur, et le résultat de la conversion sera alors multiplié par le rapport (k2.Ti2/k1.Ti1) pour être défini selon la même échelle que pour les points sombres.

Si le seuil n'est pas dépassé, c'est-à-dire si l'éclairement est suffisamment faible, on aiguille vers le convertisseur analogique-numérique la sortie du deuxième amplificateur.

Là encore, la détection d'un seuil pourrait être effectuée sur la première mesure, par exemple en faisant une conversion analogique-numérique rapide provisoire systématique de la sortie de l'amplificateur AMP1, en commutant ou non sur l'amplificateur AMP2 en fonction du résultat de la conversion, et en faisant ensuite la conversion définitive. Cette conversion provisoire peut être réduite à un test très simple si le convertisseur est un convertisseur à rampe auquel on applique une rampe provisoire de durée fixe (brève) définissant un seuil d'éclairement.

Enfin, dans une réalisation, on peut prévoir que la structure de multiplication fonctionne par application de potentiels opposés sur deux grilles (c'est le cas dans ce qui a été décrit ci-dessus). On peut alors commander la première grille (GA) par des conducteurs de ligne reliant les pixels d'une même ligne et la deuxième grille (GB) par des conducteurs de colonne reliant les pixels d'une même colonne. L'amplification par alternance de potentiels ne se produit que si à la fois les grilles GA et les grilles GB reçoivent des potentiels opposés en alternance périodique. On peut prévoir des moyens pour sélectionner une partie seulement des lignes de pixels pour appliquer à leurs grilles GA une alternance de potentiels et des moyens pour sélectionner une partie seulement des colonnes de pixels pour appliquer à leurs grilles GB une alternance de potentiels en opposition de phase avec celle des lignes. Dans ce cas, seuls les pixels aux intersections de ces lignes et colonnes subiront une amplification par multiplication d'électrons dans le pixel. On peut donc sélectionner une région d'intérêt dans l'image, notamment une région sombre, pour lui appliquer une amplification par multiplication d'électrons avec deux coefficients sans l'appliquer aux autres régions.

## Revendications

1. Capteur d'image à pixels actifs, chaque pixel comportant au moins une photodiode (PHD), un noeud de stockage de charges (18), une structure d'amplification par multiplication d'électrons (AMP), des moyens de transfert d'électrons (TR1) de la photodiode vers la structure d'amplification, des moyens de transfert d'électrons (TR2) de la structure d'amplification vers le noeud de stockage après multiplication, un transistor (RS) de réinitialisation du potentiel du noeud de stockage, le capteur comportant en outre un circuit de lecture (Ks, Kr, Cs, Cr, ADC) pour échantillonner le potentiel du noeud de stockage de charges après réinitialisation et après transfert des électrons dans le noeud de stockage et fournir une mesure d'éclairement correspondante, **caractérisé en ce que** le capteur comporte en outre des moyens pour faire au cours d'une trame d'image un premier transfert de charges de la photodiode vers la structure de multiplication au bout d'une première durée (Ti1) et pour donner alors à la structure d'amplification un premier facteur de multiplication d'électrons (k1) avant un premier transfert de charges de la structure de multiplication dans le noeud de stockage, des moyens pour faire au cours de la même trame d'image un deuxième transfert de charges de la photodiode vers la structure de multiplication au bout d'une deuxième durée (Ti2) suivant la première durée et pour donner alors à la structure un deuxième facteur de multiplication d'électrons (k2) différent du premier avant un deuxième transfert de charges de la structure d'amplification vers le noeud de stockage, et des moyens pour sélectionner pixel par pixel une mesure d'éclairement correspondant au premier facteur ou au deuxième facteur en fonction de l'éclairement du pixel, évalué à partir d'une quantité de charges transférée dans le noeud de stockage.

2. Capteur d'image selon la revendication 1, **caractérisé en ce que** les mesures d'éclairement faites avec les deux facteurs de multiplication différents sont faites avec deux temps d'intégration différents (Ti1, Ti2) et la mesure d'éclairement faite avec le facteur d'amplification le plus petit (k1) est faite avec le temps d'intégration le plus petit (Ti1).

3. Capteur d'image selon l'une des revendications 1 et 2, **caractérisé en ce qu'**il comporte
- des moyens pour effectuer une réinitialisation du potentiel du noeud de stockage dans le circuit de lecture avant le premier transfert de charges de la structure d'amplification vers le noeud de stockage, et un échantillonnage du potentiel du noeud de stockage après ce premier transfert,
- des moyens pour effectuer une réinitialisation du potentiel du noeud de stockage et un échantillonnage de ce potentiel dans le circuit de lecture, avant le deuxième transfert de charges de la structure d'amplification vers le noeud de stockage, et un échantillonnage du potentiel du noeud de stockage après ce deuxième transfert,
- des moyens pour effectuer dans le circuit de lecture une conversion analogique-numérique d'au moins une différence entre un échantillon pris après un transfert d'électrons vers le noeud de stockage et un échantillon pris entre la réinitialisation du noeud de stockage et ce transfert.

4. Capteur selon l'une des revendications 1 à 3, **caractérisé en ce que** le circuit de lecture comporte deux capacités d'échantillonnage, une capacité étant réservée à un échantillonnage du niveau de réinitialisation du noeud de stockage et une autre capacité étant réservée à un échantillonnage du niveau après un transfert d'électrons vers le noeud de stockage, le capteur comportant des moyens pour échantillonner systématiquement dans la deuxième capacité le niveau résultant du premier transfert vers le noeud de stockage, et des moyens pour échantillonner conditionnellement dans la deuxième capacité le niveau résultant du deuxième transfert vers le noeud de stockage, la condition étant une condition de niveau de signal du noeud de stockage après un transfert.

5. Capteur selon l'une des revendications 1 et 2, **caractérisé en ce que** le circuit de lecture comporte trois capacités d'échantillonnage, et **en ce que** le capteur comporte en outre
- des moyens pour effectuer une réinitialisation du potentiel du noeud de stockage dans le circuit de lecture avant le premier transfert de charges de la structure d'amplification vers le noeud de stockage, et un échantillonnage du potentiel du noeud de stockage dans la première capacité avant ce premier transfert,
- et des moyens pour échantillonner le potentiel du noeud de stockage dans la deuxième capacité après le premier transfert vers le noeud de stockage et pour échantillonner le potentiel du noeud de stockage dans la troisième capacité après le deuxième transfert vers le noeud de stockage, sans réinitialisation du noeud de stockage entre le premier et le deuxième transferts vers le noeud de stockage.

6. Capteur selon l'une des revendications 1 à 5, **caractérisé en ce que** la structure d'amplification comprend, insérée entre une première grille de transfert de la photodiode vers la structure d'amplification et une deuxième grille de transfert de la structure d'amplification vers le noeud de stockage, deux grilles d'accélération (GA, GB) situées entre la première et la deuxième grille de transfert, et une région de diode intermédiaire (DI) à potentiel superficiel fixe située entre les deux grilles d'accélération, et des moyens pour appliquer aux grilles d'accélération une succession d'alternances de potentiels hauts et bas permettant des transferts successifs de charges d'une grille d'accélération à l'autre à travers la région de diode intermédiaire.

7. Capteur selon l'une des revendications 1 à 6, **caractérisé en ce que** l'amplification par deux facteurs de multiplication d'électrons est effectuée sélectivement dans une région d'intérêt du capteur.

## Patentansprüche

1. Bildsensor mit aktiven Pixeln, wobei jeder Pixel mindestens eine Photodiode (PHD), einen Ladungsspeicherungsknoten (18), eine Struktur zur Verstärkung durch Elektronenmultiplikation (AMP), Mittel zum Elektronentransfer (TR1) von der Photodiode zur Verstärkungsstruktur, Mittel zum Elektronentransfer (TR2) von der Verstärkungsstruktur zum Ladungsspeicherungsknoten nach Multiplikation, einen Reinitialisierungstransistor (RS) des Potenzials des Speicherungsknotens, wobei der Sensor zudem einen Leseschaltkreis (Ks, Kr, Cs, Cr, ADC) zum Abtasten des Potenzials des Ladungsspeicherungsknoten nach Reinitialisierung und nach Elektronentransfer in den Ladungsspeicherungsknoten und zum Bereitstellen einer entsprechenden Beleuchtungsstärkemessung beinhaltet, **dadurch gekennzeichnet, dass** der Sensor zudem Mittel beinhaltet, um im Zuge eines Bildrahmens einen ersten Ladungstransfer von der Photodiode an die Multiplikationsstruktur nach Ablauf einer ersten Dauer (Ti1) vorzunehmen, und um dann der Multiplikationsstruktur einen ersten Elektronenmultiplikationsfaktor (k1) vor einem ersten Ladungstransfer von der Multiplikationsstruktur an den Speicherungsknoten zu geben, Mittel, um im Zuge desselben Bildrahmens einen zweiten Ladungstransfer von der Photodiode an die Multiplikationsstruktur nach Ablauf einer zweiten Dauer (Ti2), welche der ersten Dauer folgt, vorzunehmen, und um dann der Struktur einen zweiten Elektronenmultiplikationsfaktor (k2) zu geben, welcher sich vom ersten unterscheidet, vor einem zweiten Ladungstransfer von der Verstärkungsstruktur an den Speicherungsknoten, und Mittel zur Auswahl, Pixel für Pixel, einer Beleuchtungsstärkemessung, welche dem ersten Faktor oder dem zweiten Faktor angesichts der Beleuchtungsstärke des Pixels entspricht, welche anhand einer Menge von in den Speicherungsknoten transferierten Ladungen bewertet wird.

2. Bildsensor nach Anspruch 1, **dadurch gekennzeichnet, dass** die Beleuchtungsstärkemessungen, welche mit den beiden unterschiedlichen Multiplikationsfaktoren durchgeführt werden, mit zwei unterschiedlichen Integrationszeiten (Ti1, Ti2) durchgeführt werden und die mit dem kleineren Multiplikationsfaktor durchgeführte Beleuchtungsstärkemessung (k1) mit der kleineren Integrationszeit (Ti1) durchgeführt wird.

3. Bildsensor nach einem der Ansprüche 1 und 2, **dadurch gekennzeichnet, dass** er Folgendes beinhaltet:
- Mittel zum Durchführen einer Reinitialisierung des Potenzials des Speicherungsknotens in dem Leseschaltkreis vor dem ersten Ladungstransfer von der Verstärkungsstruktur an den Speicherungsknoten, und einer Abtastung des Potenzials des Speicherungsknotens nach diesem ersten Transfer,
- Mittel zum Durchführen einer Reinitialisierung des Potenzials des Speicherungsknotens und einer Abtastung dieses Potenzials in dem Leseschaltkreis vor dem zweiten Ladungstransfer von der Verstärkungsstruktur an den Speicherungsknoten, und eine Abtastung des Potenzials des Speicherungsknotens nach diesem zweiten Transfer,
- Mittel zum Durchführen, in dem Leseschaltkreis, einer Analog-DigitalWandlung von mindestens einer Differenz zwischen einem nach einem Elektronentransfer an den Speicherungsknoten abgenommenen Abtastwert und einem zwischen der Reinitialisierung des Speicherungsknotens und diesem Transfer abgenommenen Abtastwert.

4. Sensor nach einem der Ansprüche 1 bis 3, **dadurch gekennzeichnet, dass** der Leseschaltkreis zwei Abtastkapazitäten beinhaltet, wobei eine Kapazität einer Abtastung des Reninitialisierungspegels des Speicherungsknotens vorbehalten ist, und eine andere Kapazität einer Abtastung des Pegels nach einem Elektronentransfer an den Speicherungsknoten vorbehalten ist, wobei der Sensor Mittel zum systematischen Abtasten des aus dem ersten Transfer an den Speicherungsknoten resultierenden Pegels in der zweiten Kapazität und Mittel zum bedingten Abtasten des aus dem zweiten Transfer an den Speicherungsknoten resultierenden Pegels in der zweiten Kapazität beinhaltet, wobei die Bedingung eine Signalpegelbedingung des Speicherungsknotens nach einem Transfer ist.

5. Sensor nach einem der Ansprüche 1 und 2, **dadurch gekennzeichnet, dass** der Leseschaltkreis drei Abtastkapazitäten beinhaltet und dadurch, dass der Sensor zudem Folgendes beinhaltet:
- Mittel zum Durchführen einer Reinitialisierung des Potenzials des Speicherungsknotens in dem Leseschaltkreis vor dem ersten Ladungstransfer von der Verstärkungsstruktur an den Speicherungsknoten, und einer Abtastung des Potenzials des Speicherungsknotens in der ersten Kapazität vor diesem ersten Transfer,
- und Mittel zum Abtasten des Potenzials des Speicherungsknotens in der zweiten Kapazität nach dem ersten Transfer an den Speicherungsknoten und zum Abtasten des Potenzials des Speicherungsknotens in der dritten Kapazität nach dem zweiten Transfer an den Speicherungsknoten, ohne Reinitialisierung des Speicherungsknotens zwischen dem ersten und dem zweiten Transfer an den Speicherungsknoten.

6. Sensor nach einem der Ansprüche 1 bis 5, **dadurch gekennzeichnet, dass** die Verstärkungsstruktur, zwischengeschaltet zwischen einem ersten Transfergitter zum Transfer von der Photodiode zur Verstärkungsstruktur und einem zweiten Transfergitter zum Transfer von der Verstärkungsstruktur zum Speicherungsknoten, zwei Beschleunigungsgitter (GA, GB), welche zwischen dem ersten und dem zweiten Transfergitter befindlich sind, und einen Dioden-Zwischenbereich (DI) mit festem Oberflächenpotenzial, welcher zwischen den beiden Beschleunigungsgittem befindlich ist, und Mittel zum Anwenden einer Abfolge von Potenzialwechseln von hoch zu niedrig auf die Beschleunigungsgitter beinhaltet, welche aufeinander folgende Transfers von Ladungen von einem Beschleunigungsgitter zum anderen durch den Dioden-Zwischenbereich ermöglichen.

7. Sensor nach einem der Ansprüche 1 bis 6, **dadurch gekennzeichnet, dass** die Verstärkung durch zwei Elektronen-Multiplikationsfaktoren selektiv in einem Bereich von Interesse des Sensors durchgeführt wird.

## Claims

1. Image sensor with active pixels, each pixel comprising at least one photodiode (PHD), a charge storage node (18), an electron multiplication amplification structure (AMP), means for transferring electrons (TR1) from the photodiode to the amplification structure, means for transferring electrons (TR2) from the amplification structure to the storage node after multiplication, a transistor (RS) for reinitialising the potential of the storage node, the sensor furthermore comprising a reading circuit (Ks, Kr, Cs, Cr, ADC) for sampling the potential of the charge storage node after reinitialisation and after transfer of the electrons into the storage node and for providing a corresponding illumination measurement, **characterized in that** the sensor furthermore comprises means for effecting in the course of an image frame a first transfer of charges from the photodiode to the multiplication structure after a first duration (Ti1) and for then giving the amplification structure a first electron multiplication factor (k1) before a first transfer of charges from the multiplication structure into the storage node, means for effecting in the course of the same image frame a second transfer of charges from the photodiode to the multiplication structure after a second duration (Ti2) following the first duration and for then giving the structure a second electron multiplication factor (k2) different from the first before a second transfer of charges from the amplification structure to the storage node, and means for selecting pixel by pixel an illumination measurement corresponding to the first factor or to the second factor as a function of the illumination of the pixel, evaluated based on a quantity of charges transferred into the storage node.

2. Image sensor according to claim 1, **characterized in that** the illumination measurements made with the two different multiplication factors are made with two different integration times (Ti1, Ti2) and the illumination measurement made with the smaller amplification factor (k1) is made with the smaller integration time (Ti1).

3. Image sensor according to one of claims 1 and 2, **characterized in that** it comprises
- means for performing a reinitialisation of the potential of the storage node in the reading circuit before the first transfer of charges from the amplification structure to the storage node, and a sampling of the potential of the storage node after this first transfer,
- means for performing a reinitialisation of the potential of the storage node and a sampling of this potential in the reading circuit, before the second transfer of charges from the amplification structure to the storage node, and a sampling of the potential of the storage node after this second transfer,
- means for performing in the reading circuit an analogue-digital conversion of at least one difference between a sample taken after a transfer of electrons to the storage node and a sample taken between the reinitialisation of the storage node and this transfer.

4. Sensor according to one of claims 1 to 3, **characterized in that** the reading circuit comprises two sampling capacitors, one capacitor being reserved for a sampling of the storage node reinitialisation level and another capacitor being reserved for a sampling of the level after a transfer of electrons to the storage node, the sensor comprising means for sampling systematically in the second capacitor the level resulting from the first transfer to the storage node, and means for sampling conditionally in the second capacitor the level resulting from the second transfer to the storage node, the condition being a condition of signal level of the storage node after a transfer.

5. Sensor according to one of claims 1 and 2, **characterized in that** the reading circuit comprises three sampling capacitors, and **in that** the sensor furthermore comprises
- means for performing a reinitialisation of the potential of the storage node in the reading circuit before the first transfer of charges from the amplification structure to the storage node, and a sampling of the potential of the storage node in the first capacitor before this first transfer,
- and means for sampling the potential of the storage node in the second capacitor after the first transfer to the storage node and for sampling the potential of the storage node in the third capacitor after the second transfer to the storage node, without reinitialisation of the storage node between the first and the second transfers to the storage node.

6. Sensor according to one of claims 1 to 5, **characterized in that** the amplification structure comprises, inserted between a first transfer gate for transferring from the photodiode to the amplification structure and a second transfer gate for transferring from the amplification structure to the storage node, two acceleration gates (GA, GB) situated between the first and the second transfer gate, and an intermediate diode region (DI) with fixed surface potential, situated between the two acceleration gates, and means for applying to the acceleration gates a succession of alternations of high and low potentials allowing successive transfers of charges from one acceleration gate to the other through the intermediate diode region.

7. Sensor according to one of claims 1 to 6, **characterized in that** the amplification by two electron multiplication factors is performed selectively in a region of interest of the sensor.
